# EUROPÄISCHE PATENTSCHRIFT

(11) **EP 0 759 131 B1**
(45) Veröffentlichungstag und Bekanntmachung des Hinweises auf die Patenterteilung: **02.05.2002**
(21) Anmeldenummer: 96902851.3
(22) Anmeldetag: 29.02.1996
(51) Int. Cl.: F16K 11/044, F16K 1/48, F16K 1/42

(54) **VENTIL MIT MINDESTENS EINEM VENTILSITZELEMENT**
VALVE WITH AT LEAST ONE VALVE SEAT ELEMENT
SOUPAPE AVEC AU MOINS UN ELEMENT DE SIEGE DE SOUPAPE

(30) Priorität: 13.03.1995 CH 71595
(43) Veröffentlichungstag der Anmeldung: 26.02.1997
(73) Patentinhaber: Siemens Building Technologies AG, 8008 Zürich (CH)
(72) Erfinder: BRÜHLMANN, Manuel, CH-8006 Zürich (CH); ZUMBÜHL, Max, CH-8634 Hombrechtikon (CH); BUCHER, Hans, CH-8862 Schübelbach (CH)
(74) Vertreter: Patentanwälte Schaad, Balass, Menzl & Partner AG
(86) Internationale Anmeldenummer: CH9600068
(87) Internationale Veröffentlichungsnummer: WO9628674

(56) Entgegenhaltungen:
- DE-A- 3 147 063
- FR-A- 2 151 367
- FR-A- 2 268 206
- GB-A- 544 524
- US-A- 1 525 100
- ZWF ZEITSCHRIFT FUR WIRTSCHAFTLICHE FERTIGUNG UND AUTOMATISIERUNG, Bd. 81, MUNCHEN DE, Seiten 703-708, XP002003545 TAUTZENBERGER & STÖCKEL: "Anwendung von Formgedächtnis-Legierungen in der Technik" in der Anmeldung erwähnt

## Beschreibung

Die Erfindung betrifft ein Ventil mit mindestens einem Ventilsitzelement nach dem Oberbegriff von Anspruch 1 bzw. Anspruch 8.

In der CH-A-536 957 ist ein Ventil mit einem ringförmigen Ventilsitz beschrieben, auf welchen ein Schliessteil zur Auflage bringbar ist. Der Schliessteil ist mit einer Spindel verbunden, die axialverschiebbar gelagert ist. Der flächige Schliessteil ist in der Schliesslage des Ventils elastisch und sphärisch ausgewölbt und liegt mit seinem Randbereich unmittelbar auf dem Ventilsitz auf. Der Schliessteil besteht aus zwei Scheiben, die mittels einer Mutter unter Zwischenlage zweier Unterlagscheiben auf dem bezüglich des Ventilgehäuses inneren Ende der Spindel festgeklemmt sind. Dieser Schliessteil verhält sich bei dieser Bauweise wie eine selbsttragende Membrane, die in ihrer Mitte fest eingespannt ist und die sich, wenn nur an ihrem Umfang auf dem Ventilsitz abgestützt, elastisch und sphärisch auswölben lässt. Um zu verhindern, dass die Elastizitätsgrenze der beiden den Schliessteil bildenden Scheiben überschritten wird, kann zusätzlich eine Anschlagscheibe mit einem Abstand auf der dem Spindelende abgewandten Seite der Scheiben angeordnet sein.

Um in der Schliesslage des obigen Ventils Fluchtungsfehler zwischen der Spindelachse und der Achse des Ventilsitzes zu kompensieren, kann die Spindel in ihrem an den Schliessteil angrenzenden Bereich elastisch durchbiegbar ausgebildet sein. Um geringfügige Fertigungsungenauigkeiten bei der Herstellung der einzelnen Elemente des Ventils auszugleichen, wie beim Einschrauben des Ventilsitzringes, bei der Aufhängung der beweglich verschiebbaren Spindel, beim Gewindeschneiden des Innengewindes in die Trennwand zwischen den zwei Strömungskammern im Ventilgehäuse und dergleichen, muss der Schliessteil mit einer zur Dichtkraft zusätzlichen Schliesskraft auf den Ventilsitz gedrückt werden, um die schrägstellung des Schliessteiles zu überwinden. Ferner ist eine grössere Überlappung zwischen dem Schliessteil und dem ringförmigen Ventilsitz unumgänglich, um Fertigungsungenauigkeiten in der Überlappung und damit undichte Stellen in der Schliesslage zu verhindern. Um eine grössere Wirkgenauigkeit der Schliesslage zu erreichen, sind daher höhere Schliesskräfte notwendig, was eine grössere Dimensionierung des elektromagnetischen Antriebes bedingt, sowie eine genaue Dimensionierung der Toleranzen zur Einhaltung der Überlappungsfläche notwendig.

Aus der Druckschrift US-A-1 525 100 ist ein gattungsgemässes Ventil bekannt, welches ein ringförmiges Ventilsitzelement, eine bewegliche Spindel sowie einen an die Spindel gekoppelten Schliessteil umfasst. An der Spindel sind zwei plane Abstützungen angeordnet, zwischen welchen der Schliessteil eingeklemmt ist. Die Spindel besitzt ein Aussengewinde, auf dem eine Schraubenmutter aufgeschraubt ist, um die zwei planen Abstützungen lösbar miteinander zu verschrauben und die erforderliche Klemmkraft auf die zwei planen Abstützungen zu bewirken. Diese Anordnung erlaubt einen abgenutzten Schliessteil zu ersetzen, wobei die Ausrichtung des neu eingefügten, zwischen den zwei planen Abstützungen befestigten Schliessteils durch den vorgegebenen Verlauf von Spindel und planen Flächen der Abstützungen bestimmt ist. Um in der Schliesslage Fluchtungsfehler zwischen der Spindelachse und der Achse des Ventilsitzes auszugleichen, weist die Spindel ein Gelenk auf. Dieses Gelenk verleiht jedoch dem Schliessteil auch während des Betriebes noch Spiel, so dass der Schliessteil bei jedem Schliessvorgang in unterschiedliche Positionen auf dem Ventilsitz geraten kann, wodurch wiederum störende Fluchtungsfehler zwischen dem Schliessteil und dem Ventilsitz entstehen können.

Der vorliegenden Erfindung liegt die Aufgabe zugrunde, ein Ventil der gattungsgemässen Art derart zu verbessern, dass eine Reduktion der Schliesskräfte mit minimalem zusätzlichen Aufwand bei der üblichen Fertigungstechnik und eine genauere Überlappung des Schliessteils ohne zusätzliche Toleranzen in Bezug auf den Ventilsitz erhalten werden kann.

Diese Aufgabe wird erfindungsgemäss durch ein Ventil mit den Merkmalen des Patentanspruchs 1 oder 8 gelöst.

Die Erfindung hat den grossen Vorteil, dass mit den üblichen Qualitätsanforderungen bei der Herstellung eine grössere Genauigkeit der Schliesslage eines Ventils erreicht werden kann und dennoch keine weitere Betriebsmittel mehr erforderlich sind. Die benötigten auf den Schliessteil wirkenden Schliesskräfte sind wesentlich geringer, so dass die Bedienung des Ventils mit kleiner dimensionierten elektromagnetischen Antrieben bewerkstelligt werden können. Die konstruktiven Masse des Ventilgehäuses können auch für das erfindungsgemässe Ventil problemlos eingehalten werden, so dass keine Änderungen im bestehenden Montageablauf vorgenommen werden müssen und der anwendungstechnische Einsatz eines erfindungsgemässen Ventils nicht beeinflusst wird. Vorteilhafterweise wird der Schliessteil unter Gegenkraft eines für den Antrieb erforderlichen Federelementes in die Schliesspasslage verstellt. Dieses Federelement bewirkt einen Kraftschluss von der Oberseite des Ventilgehäuses über die Spindel auf den Schliessteil, so dass über die Montage automatisch Passungenauigkeiten ausgeglichen werden.

Weitere Einzelheiten und Vorteile der Erfindung ergeben sich aus den abhängigen Ansprüchen und aus der nachfolgenden Beschreibung, in welcher verschiedene Ausführungsformen des erfindungsgemässen Ventils anhand der schematischen Zeichnungen rein beispielsweise näher beschrieben werden.

Es zeigt:
- Fig. 1: ein Dreiwegventil mit zwei Ventilsitzen teilweise in Längsschnitt und teilweise in Ansicht,
- Fig. 2: im Querschnitt eine erste Variante für die Befestigung des Schliessteils mit der Spindel, mit einem Schliessteil-Anschlag und mit radialer und Kipp-Beweglichkeit des schliessteiles,
- Fig. 3: im Querschnitt eine zweite Variante für die Befestigung des Schliessteils mit der Spindel, mit Innenzentrierung des Schliessteiles über die Spindel und Zentrierung des Ventilsitzelementes über ein von der Spindel geführten Führungselement, und nur mit Kipp-Beweglichkeit des Schliessteiles,
- Fig. 4: im Querschnitt eine dritte Variante für die Befestigung des Schliessteils mit der Spindel, mit einem Schliessteil-Anschlag und Aussenzentrierung des Schliessteils mittels eines am zweiten Ventilsitzelement geführten Führungselementes, und mit radialer, axialer und Kipp-Beweglichkeit des Schliessteils,
- Fig. 5: im Querschnitt eine vierte Variante für die Befestigung des Schliessteils mit der Spindel, mit einem Schliessteil-Anschlag und Aussenzentrierung des Schliessteils mittels eines am ersten Ventilsitzelement geführten Führungselementes, und mit radialer, axialer und Kipp-Beweglichkeit des Schliessteils,
- Fig. 6: in einem Ausschnitt die Drehverstellbarkeit des ersten Ventilsitzes, und
- Fig. 7: in einem Ausschnitt die Drehverstellbarkeit des zweiten Ventilsitzes.

In den Figuren sind für dieselben Elemente jeweils dieselben Bezugszeichen verwendet worden, so dass eine erstmalige Erklärung zu einem bestimmten Element ebenso für die anderen Figuren gelten, wenn nichts anderes angegeben ist.

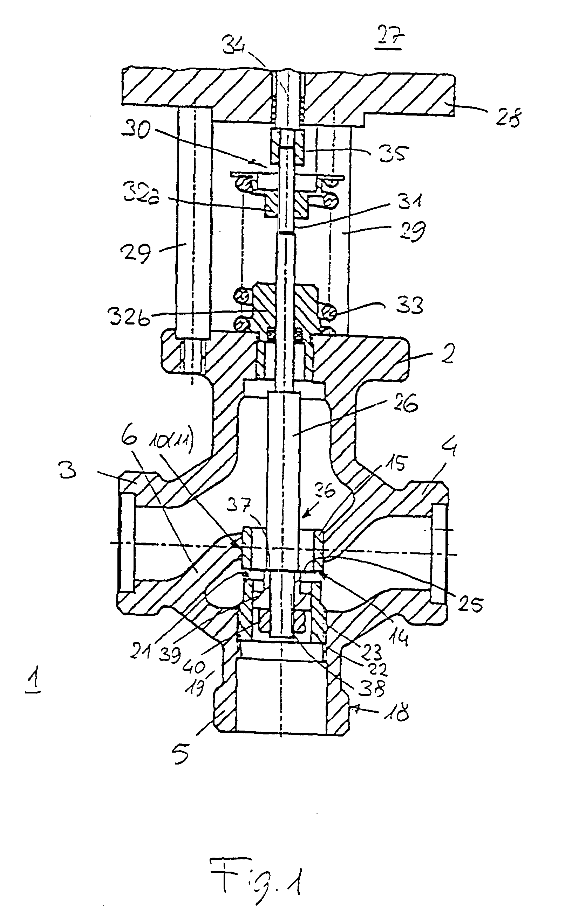

In Figur 1 ist ein Dreiwegventil 1 mit einem Ventilgehäuse 2 dargestellt. Das Gehäuse 2 weist drei Anschlussstutzen 3, 4 und 5 auf, von denen die Anschlussstutzen 3 und 4 sich diametral gegenüberliegen und der Anschlussstutzen 5 mit seiner Achse rechtwinklig zu den Achsen der Anschlussstutzen 3 und 4 unten im Ventilgehäuse 2 angeordnet ist. Durch eine Trennwand 6 ist das Ventilgehäuse 2 in zwei Kammern 7 und 8 eingeteilt, in welchen die Anschlussstutzen 3 und 4 münden. In der Trennwand 6 ist eine zentrale Bohrung 10 mit einem Innengewinde 11 vorgesehen, in welches ein erstes, einen ringförmigen Ventilsitz 14 aufweisendes Ventilsitzelement 15 mit einem Aussengewinde 16 eingeschraubt oder eingepresst ist. Der innere Endbereich 18 des Anschlussstutzens 5 ist mit einem Innengewinde 19 versehen, in welches ein zweites, einen ringförmigen Ventilsitz 21 aufweisendes Ventilsitzelement 22 mit seinem Aussengewinde 23 eingeschraubt oder eingepresst ist. Ein als dünne Kreisscheibe ausgebildeter Schliessteil 25 ist auf einer stangenförmigen Spindel 26 befestigt und in Axialrichtung zwischen den beiden Ventilsitzelementen 15 und 22 in eine jeweilige Schliesslage auf- und abbewegbar. Die Achsen der Ventilsitzelemente 15 und 22 sind koaxial mit der Spindel 26.

Auf dem Ventilgehäuse 2 ist ein hier nicht dargestellter elektromagnetischer Antrieb 27 in einem Gehäuse 28 mit drei im Ventilgehäuse 2 eingeschraubten Stützpfeiler 29 (nur zwei in der Figur ersichtlich) befestigt. Im oberen Endbereich 30 ist die Spindel 26 mit einem Aussengewinde 31 versehen, auf dem eine Überwurfmutter 32a geschraubt ist. Zwischen der Überwurfmutter 32a und einer im Ventilgehäuse 2 eingeschraubten oder eingepressten Spindeldurchführung 32b ist eine als auf den Schliessteil 25 wirkenden Federelement dienende Spiralfeder 33 vorgespannt. Die nur teilweise dargestellte Ankerspindel 34 des elektromagnetischen Antriebes 27 steht drückend auf ein auf die Spindel 26 aufgeschraubtes Rohrstück 35 in Anschlag.

Ferner weist der untere Endbereich 36 der Spindel 26 eine Ringstufe 37 und ein Aussengewinde 38 auf. Der Schliessteil 25 liegt an der Ringstufe 37 an und ist mittels eines an der Innenwand des zweiten Ventilsitzelementes 22 geführten Führungselement 39 und einer auf das Aussengewinde 38 geschraubten Mutter 40 auf der Spindel 26 befestigt. Damit ist eine kraftschlüssige Verbindung über das Ventilgehäuse 2, die Spiralfeder 33 und dem auf der Spindel 26 befestigten Schliessteil 25 gewährleistet. Die Spindel 26 wird somit oben an der Spindeldurchführung 32b und unten am Führungselement 39 gelagert.

In Figur 2 ist eine erste Variante der Befestigung des Schliessteils 25 mit der Spindel 26 im Bereich der beiden Ventilsitzelemente 15 und 22 dargestellt. Der Schliessteil 25 ist beidseitig von einer oberen Stützplatte 43 und einer unteren Stützplatte 44 eingeklemmt. Die Dicke dieser Stützplatten 43 und 44 ist wesentlich grösser - in etwa zehnfach - als diejenige des dünnen Schliessteils 25. Der Randbereich 45 der Stützplatten 43 und 44 ist je mit einer auf der dem Schliessteil 25 zugewandten Seite radial offenen, kreisringförmigen Ausnehmung 46 versehen. Die Stützplatten 43 und 44 können auch sternförmig ausgebildet sein, wobei die Sternzacken in axialer Richtung gesehen versetzt zueinander, d.h. nicht deckungsgleich, anzuordnen sind. Damit kann der Schliessteil 25 höchstens noch in seinem Randbereich in der Schliesslage in einem nur beschränkten Masse elastisch und sphärisch ausgewölbt werden.

Die Spindel 26 ist hier hohlzylindrisch ausgebildet, kann aber auch massiv sein. Das Führungselement 39 ist von einem breiten Ring 50 mit radialen, über dessen Umfang regelmässig verteilten Abstandhaltern 51 gebildet, die an der Innenwand des ersten Ventilsitzelementes 15 geführt sind. Der Ring 50 ist auf der Spindel 26 zwischen einem oberen Zwischenrohr 52 und einem mit einem nach aussen gestülpten Rand versehenen oberen hutartigen Fassungring 53 eingeklemmt. Das obere Zwischenrohr 52 ist dabei beispielsweise gegen die Spindeldurchführung 32b (vergleiche Figur 1) nach oben abgestützt. Der Fassungsring 53 liegt auf einer kalottenartigen Wölbung 56 der oberen Stützplatte 43 auf. Ebenso ist die untere Stützplatte 44 mit einer kalottenartige Wölbung 57 versehen, gegen welche ein unterer hutartiger Fassungsring 58 drückt, welcher identisch zum oberen Fassungsring 53 ausgebildet ist. Ein als Zylinderkappe ausgebildetes unteres Zwischenrohr 59 ist mit einer Bohrung 60 zur Aufnahme einer Schraube 62 gebildet, die in ein axiales Innengewinde 63 im unteren freien Endbereich 36 der Spindel 26 geschraubt ist. Durch die Vorspannung des Federelementes 33 wird eine Haftreibung des Schliessteiles 25 auf den Ventilsitz 14 ausgeübt, so dass dem durch das Festschrauben auf die Spindel 26 ausgeübten Drehmoment entgegengewirkt wird.

Der innere Lochdurchmesser der beiden Stützplatten 43 und 44 und derjenige des Schliessteils 25 weisen ausreichendes Spiel zum Aussendurchmesser der Spindel 26 auf, so dass der von den Stützplatten 43 und 44 eingefasste Schliessteil 25 eine Kippbewegung unter Kraftschluss in einem begrenzten Winkelbereich bezüglich der Achse 66 der Spindel 26 ausführen kann. Somit stellt sich der Schliessteil 25 automatisch in die genaue Schliesspasslage auf den oberen Ventilsitz 14 des Ventilsitzelementes 15 aufgrund der von der Spiralfeder 33 auf den Schliessteil 25 ausgeübte Schliesskraft ein. Vorausgesetzt wird dabei, dass die Schraube 62 noch nicht definitiv angezogen ist, d.h. das Ventil 1 sich noch im vormontierten Zustand befindet. Da der zweite Ventilsitz 22 bei der Montage schon auf den ersten Ventilsitz 15 ausgerichtet worden ist, d.h. die Ventilsitze 14 und 21 genau in parallelen Ebenen sind, bedarf es keiner weiteren Einstellung des Schliessteils 25 mehr bezüglich des zweiten Ventilsitzes 21. Wenn diese Einstellung erfolgt ist, wird die Schraube 62 definitiv mit einem vorgegebenen Drehmoment angezogen und in dieser Lage fixiert.

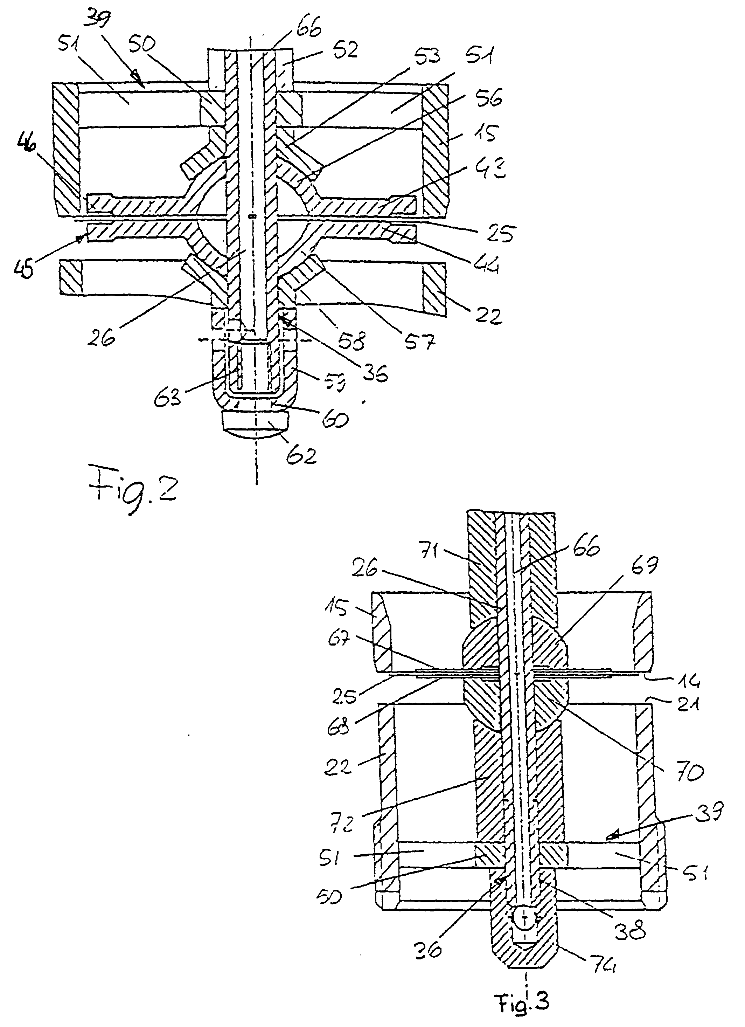

In Figur 3 ist eine zweite Variante der drehverstellbaren Befestigung des Schliessteils 25 mit der Spindel 26 dargestellt. Hier ist der Schliessteil 25, umgeben von etwa gleich dünnen und flachen Stützplatten 67 und 68 geringeren Durchmessers, zwischen zwei Halbkugeln 69 und 70 eingeklemmt. Diese Halbkugeln 69 und 70 sind von einem oberen Zwischenrohr 71 und einem unteren Zwischenrohr 72 auf der Spindel 26 klemmend gehalten. Die Zwischenrohre 71 und 72 sind entsprechend den Halbkugeln 69 und 70 mit kugelartigen Ausbuchtungen versehen. Unterhalb des unteren Zwischenrohres 72 ist in diesem Fall der Ring 50 mit den Abstandshaltern 51 als Führungselement 39 zur Führung an der Innenwand des zweiten Ventilsitzelementes 22 vorgesehen. Mittels einer auf dem Aussengewinde 38 am freien Endbereich 36 der Spindel 26 geschraubten Hutmutter 74 ist die ganze Anordnung gegen die Spindeldurchführung 32b (vergleiche Figur 1) abgestützt.

Bei dieser Variante ist der Schliessteil 25 durch die Abstützung der Halbkugeln 69 und 70 an der Spindel 26 in einem begrenzten Winkelbereich kippbar bezüglich der Achse 66 gelagert. Dazu kann die zentrale Bohrung einer Halbkugel 69 und 70 von aussen nach innen leicht konisch ausgebildet sein, so dass im Bereich des Schliessteils 25 eine Art "Drehpunkt" an der Spindel 26 entsteht. Dieser "Drehpunkt" wird tatsächlich von einem ringförmigen Bereich um die Spindel 26 gebildet, so dass die Halbkugeln 69 und 70 zusammen an der Spindel 26 in einem sehr beschränkten Drehwinkelbereich abrollen können. Die Spindel 26 selber ist vom aus dem Ring 50 und den Abstandshaltern 51 bestehenden Führungselement 39 an der Innenwand des zweiten Ventilsitzelementes 22 geführt. Durch das Spiel des im Aussengewinde 23 eingeschraubten Ventilsitzelementes 22 ist dieses im vormontierten Zustand axial beweglich und wird vom Führungselement 39 bezüglich der Spindel 26 zentriert. Das Ventilsitzelement 22 wird dann in dieser eingestellten Schliesspasslage fixiert, beispielsweise durch Löten oder Verkleben mit einem geeigneten schnell trocknenden Klebstoff (z.B. "Loctite"). Es versteht sich, dass diese Führung auch nur für das erste Ventilsitzelement 15 vorgesehen sein kann, wozu dann das Führungselement 39 oberhalb des Schliessteiles 25 an der Spindel 26 angeordnet ist.

Falls die Eigensteifigkeit und die Ausrichtung der Spindel 26 in ihrem freien Endbereich 36 ausreichend ist, kann auch auf eine solche Führung mittels des Führungselementes 39 verzichtet werden.

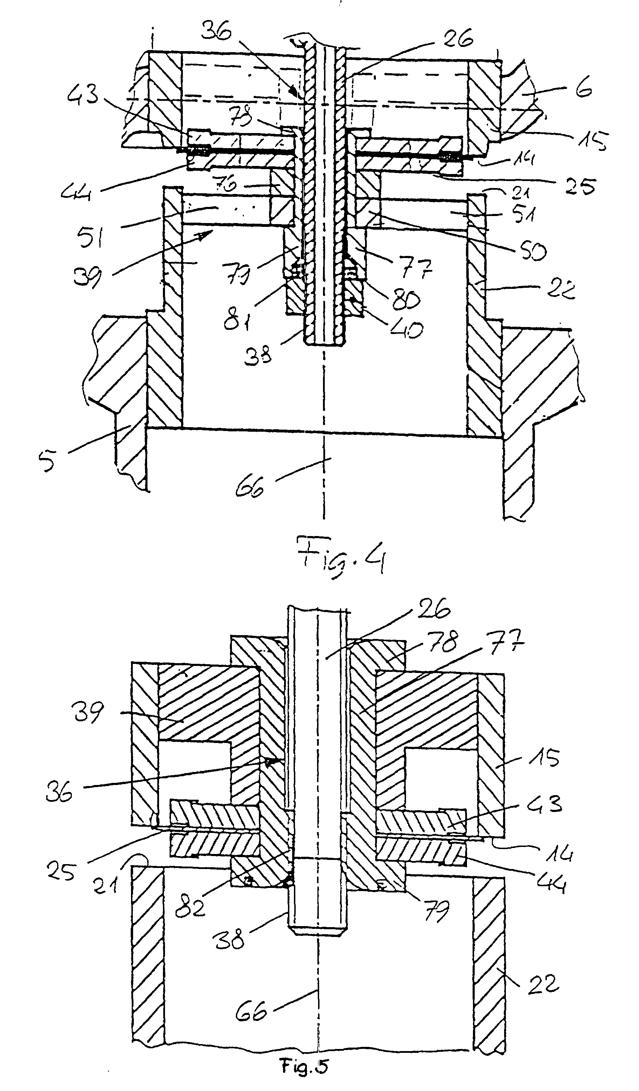

In Figur 4 ist eine dritte Variante der drehverstellbaren Befestigung des Schliessteils 25 mit der Spindel 26 Ventils 1 dargestellt. Der Schliessteil 25 ist hier zwischen zwei flachen Stützplatten 43 und 44 gehalten, ähnlich wie in der Ausführung der Figur 2, jedoch ohne kalottenartigen Wölbungen. Die Stützplatten 43 und 44 und der Schliessteil 25 sind zusammen mit einem Zwischenring 76 und dem Ring 50 des Führungselementes 39 auf einer Hülse 77 mit stirnseitigen Flanschen 78 und 79 gepresst. Diese Hülse 77 weist einen Innendurchmesser auf, der grösser ist als der Aussendurchmesser der Spindel 26, so dass eine Kippbewegung der Hülse 77 auf der Spindel 26 in einem beschränkten Winkelbereich und eine Axial- und/oder Radialverschiebung der Hülse 77 bis zur koaxialen Ausrichtung möglich ist. In diesem Fall ist die Hülse 77 mit der auf dem Aussengewinde 38 geschraubten Mutter 40 nach unten auf der Spindel 26 gesichert. Jedoch ist eine Verschiebung aufwärts längs der Spindel 26 noch erlaubt. In der Schliesspasslage stellt sich demnach der Schliessteil 25 so auf den Ventilsitz 14 des ersten Ventilsitzelementes 15 ein, dass die darauf ausgeübten Schliesskräfte sich gleichmässig über den Randbereich des Schliessteils 25 verteilen, d.h. es findet eine automatische Einstellung der richtigen Position des Schliessteils 25 statt. Wenn die richtige Grösse der Schliesskraft in dieser Schliesspasslage festgelegt worden ist, wird die Hülse 77 auf der Spindel 26 durch Löten fixiert. Dazu ist in der Stirnseite des unteren Flansches 79 eine Ringnut 80 vorgesehen, in welche ein Lotring 81 eingelegt ist, der durch einen nicht-dargestellten elektrischen Induktionsring auf die erforderliche Löttemperatur erhitzt wird, um die Hülse 77 mit der Spindel 26 zu verlöten.

Bei dieser dritten Variante ist der Schliessteil 25 über die Hülse 77 mittels des Führungselementes 39 an der Innenwand des zweiten Ventilsitzelementes 22 geführt und wird derart auf den Ventilsitz 14 zentriert. Die Spindel 26 hat somit hier nur die Funktion, den Schliessteil 25 in Schliesslage zu bringen, und die genaue Passlage wird von der geführten Hülse 77 übernommen.

Eine vierte Variante, die der dritten Variante ähnlich ist, zeigt die Figur 5. Die Befestigung des Schliessteils 25 mit den beiden Stützplatten 43 und 44 ist ähnlich wie in der vorhergehenden Variante, wobei der dort gezeigte Zwischenring 76 im an der Innenwand des ersten Ventilsitzelementes 15 geführten Führungselement 39 integriert ist. Die Hülse 77 ist im unteren Endbereich mit einem Innengewinde 82 versehen, das ein gewisses Spiel gegenüber dem Aussengewinde 38 am freien Endbereich 36 der Spindel 26 aufweist. Dadurch erlaubt es der Hülse 77, eine Kippbewegung in einem begrenzten Winkelbereich bezüglich der Achse 66 der Spindel 26 und eine Axial- und/oder Radialverschiebung auszuüben, so dass wiederum eine automatische Einstellung des Schliessteils 25 auf den Ventilsitz 14 erfolgen kann. In diesem Fall kann die Fixierung der Hülse 77 einfacher vorgenommen werden, da die Hülse 77 direkt auf der Spindel 26 geschraubt ist, und so die zu lötende Stelle zwischen dem unteren Flansch 79 und dem Aussengewinde 38 einfacher zugänglich ist.

Das oben beschriebene Dreiwegventil 1 der Ausführung gemäss Figur 5 wird nun in der nachstehenden Reihenfolge zusammengesetzt, wobei selbstverständlich bestimmte Teilschritte ausgetauscht werden können, wenn dies für eine optimale Fertigung erforderlich ist:

Das erste Ventilsitzelement 15 wird in die zentrale Bohrung 10 eingeschraubt oder eingepresst. Sodann wird die den Schliessteil 25 mit den Stützplatten 43 und 44 tragende Hülse 77 auf den freien Endbereich 36 der Spindel 26 geschraubt, wobei axial ein geringes Spiel zwischen dem Schliessteil 25 und dem Ventilsitz 14 des Ventilsitzelementes 15 freigelassen wird. In dieser Stellung wird nun die Hülse 77 am beispielsweise als Aussensechskant ausgebildeten unteren Flansch 79 mit einem geeigneten Werkzeugschlüssel gehalten und die Spindel 26 bis auf eine vorbestimmte Vorspannung (d.h. mit einem bestimmten Drehmoment oder mit einer bestimmten Federvorspannung) eingestellt. Wegen des geringen radialen Spiels zwischen dem Innengewinde 82 der Hülse 77 und dem Aussengewinde 38 ist eine geringe kugelartige Drehung des Schliessteils 25 bezüglich der Spindel 26 möglich. Dadurch werden die auf den Schliessteil 25 ausgeübten Schliesskräfte über den Umfang der Auflagefläche mit dem Ventilsitz 14 gleichmässig verteilt, so dass über den ganzen Umfang gleichmässige Schliesskräfte auf den Schliessteil 25 wirken und diesen in die richtige Schliesspasslage - d.h. durch eine Kippbewegung und eine Axial- und/oder Radialverschiebung in die optimale Lage in bezug auf Dichtwirkung und Überlappung - auf den Ventilsitz 14 bringen. Dabei wird die richtige Zentrierung des Schliessteiles 25 über das Führungselement 39 am Ventilsitzelement 15 erreicht. Um diesen Zustand zu fixieren, wird der untere Flansch 79 wie oben erwähnt mit dem freien Endbereich 36 der Spindel 26 verlötet. Es kann dazu jedoch auch eine Kontermutter verwendet werden. Anschliessend wird das zweite Ventilsitzelement 22 in den inneren Endbereich 18 auf einem vorbestimmten Abstand zum ersten Ventilsitzelement 15 eingeschraubt oder eingepresst (vergleiche Figur 1).

Falls die schliesspasslage des Schliessteils 25 mit dem zweiten Ventilsitz 21 auch noch eingestellt werden soll, wird der schliessteil 25 in Schliesslage mit dem zweiten Ventilsitz 21 gebracht, und in diesem Zustand wird die Hülse 77 leicht gelockert und die Spindel 26 mit einem bestimmten Drehmoment wieder angezogen. Dadurch stellt sich die zweite Schliesspasslage in der vorgenannten Art ein, und wird dieser Zustand erst dann durch Verlöten gesichert.

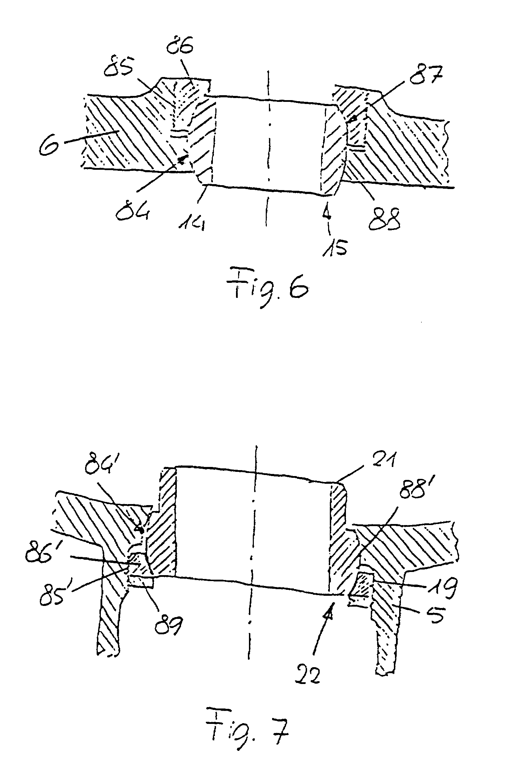

In den Figuren 6 und 7 ist eine wesentlich andere Ausführung des Dreiwegventils 1 dargestellt, indem die Ventilsitzelemente 15 und 22 im vormontierten Zustand drehbeweglich gelagert und der Schliessteil 25 schon im vormontierten Zustand drehfest auf der Spindel 26 befestigt sind (Schliessteil und Spindel nicht dargestellt). Das Ventilsitzelement 15 ist in einer als Kugelschale ausgebildeten Auflagefläche 84 in der zentralen Bohrung 10 der nur teilweise abgebildeten Trennwand 6 gehalten (vergleiche für die richtige Zuordnung Figur 1). Oberhalb der Auflagefläche 84 ist leicht zurückversetzt ein Innengewinde 85 vorgesehen, in welches ein Befestigungsring 86 mit einer als Kugelschale ausgebildete Aufnahmefläche 87 eingeschraubt ist. Das Sitzelement 15 ist an seiner radialen Aussenseite mit einem kugelsektorförmigen Wulst 88 versehen, der von der Auflagefläche 84 und der Aufnahmefläche 87 eingeklemmt ist. Durch Drehen des Befestigungsringes 86 kann die Klemmung angezogen oder gelockert werden. Zu diesem Zweck können auf dem Befestigungsring 86 (nicht dargestellte) radiale Schlitze vorgesehen sein, in welche ein Werkzeug in der Art eines Schraubendrehers eingesetzt werden kann.

In derselben Weise ist auch das Ventilsitzelement 22 im inneren Endbereich 18 des Anschlussstutzens 5 in der Art einer Kugelbewegung drehbeweglich befestigt. Die ähnlich ausgebildeten Elemente sind deshalb in dieser Figur 7 mit denselben Bezugzeichen wie in Figur 6 angegeben, jedoch mit einem kleinen hochgestellten Strich hinzugefügt. Zur Fixierung des Befestigungsringes 86' ist noch ein Konterring 89 in das Innengewinde 85' eingeschraubt. Die Funktionsweise dieser Ausführung ist wie beim ersten Ventilsitzelement 15.

Zwischen dem Befestigungsring 86 oder 86' und der Auflagefläche 84 oder 84' kann noch ein (hier nicht dargestellter) elastischer Zwischenring angeordnet sein, um eine geringfügige elastische Verdrehung des Ventilsitzelementes 15 oder 22 auch im fertig montierten Zustand zu gewährleisten. In dem vorliegenden Fall ist eine absolute Parallelität der Ebenen der Ventilsitze 14 und 21 erzielbar, vorausgesetzt, dass die Ventilsitze 14 und 21 vollkommen plan sind. Geringere Unebenheiten des Schliessteils 25 in seinem Randbereich können mit dieser Variante des Ventils 1 ausgeglichen werden.

Die in den Figuren 6 und 7 dargestellten Ventilsitzelemente 15 und 22 können jedoch auch mittels Aussengewinden ausgebildet sein, die mit einem grösseren Gewindespiel in den Innengewinden 11 und 19 (vergleiche Figur 1) eingeschraubt sind, und so eine geringfügige Drehbewegung bezüglich der Achse des Gehäuses 2 erlauben.

In einer weiteren nicht-dargestellten Variante können die Ventilsitzelemente 15 und 22 im Bereich der Ventilsitze 14 und 21 mit einer Formgedächtnis-Legierung (oder auch bekannt als sogenanntes "Memory-Metall") versehen sein.

Einzelheiten zur Formgedächtnis-Legierung können dem Artikel "Anwendung von Formgedächtnis-Legierungen in der Technik" von Tautzenberger und Stöckel in Zeitschrift für wirtschaftliche Fertigung und Automatisierung (Carl Hanser Verlag, München) Nr. 81 (1986) 12, Seiten 703 bis 708 entnommen werden. Die Einstellung in der Schliesspasslage wird dann bei erhöhter Temperatur durchgeführt, und nach der Abkühlung verbleibt der Ventilsitz 14 oder 21 in der durch die Schliesspasslage eingestellten Ebene.

Es ist auch möglich, die Spindel 26 an einer vorgegebenen Stelle mit einer Formgedächtnis-Legierung auszustatten, um eine Einstellbarkeit des Schliessteils 25 auf der Spindel 26 in der beschriebenen Art zu erreichen.

In einer Kombination der Ausführung der Figuren 6 und 7 mit den Varianten der Figuren 2 bis 5 (hier nicht weiter dargestellt) sind die Ventilsitzelemente 15 und 22 in der oben beschriebenen Art im vormontierten Zustand bewegbar und ist auch der Schliessteil 25 mit der Spindel 26 in einem beschränkten Bereich drehbar. In einem solchen Fall wird zunächst das erste Ventilsitzelement 15 voreingestellt, und dann der Schliessteil 25 in Schliesspasslage mit dem ersten Ventilsitz 14 gebracht. In diesem Zustand werden das Ventilsitzelement 15 und der Schliessteil 25 fixiert. Sodann wird der Schliessteil 25 mit dem zweiten Ventilsitz 21 in Schliesspasslage gebracht, und das Ventilsitzelement 22 in der oben erwähnten Art fixiert.

Mit den beschriebenen Ausbildungen eines Ventils lassen sich die Schliesskräfte auf ein absolut notwendiges Minimum reduzieren, da eine Schrägstellung des Schliessteiles 25 auf den Ventilsitz 14 oder 21 wegfällt und somit die Kräfte zur Verformung des Schliessteiles 25 in seinem Randbereich für eine zuverlässige Dichtung nicht mehr erforderlich sind. Deshalb sind nur noch die Dichtkräfte aufzubringen, weshalb kleinere Elektromagneten benutzt werden können. Des weiteren werden die durch fertigungstechnische Ungenauigkeiten bewirkten Toleranzen in der Überlappung des Schliessteiles 25 auf den jeweiligen Ventilsitz 14 oder 21 mittels der integrierten Zentriereinrichtung oder des Führungselementes 39 genau ausgeglichen.

## Patentansprüche

1. Ventil (1) mit mindestens einem Ventilsitzelement (15; 22), einer Spindel (26) und einem mit dieser mittels Befestigungsmitteln (62; 74; 81) verbundenen Schliessteil (25), dessen Mittelpunkt wenigstens annähernd in der Achse (66) der Spindel (26) liegt, wobei der Schliessteil (25) durch Axialverschiebung der Spindel (26) zur Auflage auf einen ringförmigen Ventilsitz (14; 21) des Ventilsitzelementes (15; 22) bringbar ist, **dadurch gekennzeichnet, dass** die Spindel (26) steif ausgebildet und ausschliesslich in Richtung der Achse (66) bewegbar ist, dass zwischen der Spindel (26) und dem Schliessteil (25) ein Spiel vorhanden ist, das bei losen Befestigungsmitteln (62; 74; 81) eine Bewegung des Schliessteils (25) in der Art einer Kugelbewegung und/oder einer Radial- und Axialbewegung in eine Schliesspasslage am Ventilsitz (14; 21) zulässt und der Schliessteil (25) mittels der Befestigungsmittel (62; 74; 81) in dieser Schliesspasslage fixierbar ist.

2. Ventil nach Anspruch 1, **dadurch gekennzeichnet, dass** der Schliessteil (25) beidseits von Stützmitteln (43, 44; 69, 70) gehalten ist, die halbkugel- oder kalottenförmige Elemente (56, 57) aufweisen, die in Fassungselementen (53, 58) gelagert sind oder die die Form von Halbkugeln aufweisen und in Fassungsmitteln (71, 72) gelagert sind.

3. Ventil nach Anspruch 2, **dadurch gekennzeichnet, dass** die Fassungselemente bzw. Fassungsmittel (53, 58; 71, 72) über die Spindel (26) geschobene hohlzylindrische Zwischenrohre sind, die an den den Stutzmitteln (43, 44; 69, 70) zugewandten Enden hutartige Fassungsringe (53, 58) oder kugelartige Ausbuchtungen aufweisen.

4. Ventil nach Anspruch 1, 2 oder 3, **dadurch gekennzeichnet, dass** die Befestigungsmittel eine Schraubenverbindung (62; 74) umfassen, mittels welcher der Schliessteil (25) zwischen den Stützmitteln (43, 44; 69, 70) in der Schliesspasslage eingeklemmt ist.

5. Ventil nach Anspruch 1, **dadurch gekennzeichnet, dass** das Schliessteil (25) beidseits von Stützmitteln (43, 44) gehalten ist, die mit einer Hülse (77) verbunden sind, welche
a) lose über die Spindel (26) geschoben und von einem mit der Spindel (26) verschraubten Verbindungselement (40) einseitig in axialer Richtung gehalten ist, oder
b) mittels einem Gewinde (82) lose mit der Spindel (26) verschraubt und dadurch in axialer Richtung gehalten ist.

6. Ventil nach Anspruch 5, **dadurch gekennzeichnet, dass** die Hülse (77) in eingestellter Lage des Schliessteils (25) mittels eines Lotmaterials (81) relativ zur Spindel (26) fixierbar ist.

7. Ventil nach einem der vorangehenden Ansprüche, **dadurch gekennzeichnet, dass** ein im Ventilsitzelement (15; 22) geführtes Führungselement (39) vorgesehen ist, durch das die Spindel (26) im Ventilsitzelement (15; 22) zentriert gehalten ist.

8. Ventil (1) mit mindestens einem Ventilsitzelement (15; 22), einer Spindel (26) und einem mit dieser fest verbundenen Schliessteil (25), dessen Mittelpunkt wenigstens annähernd in der Achse (66) der Spindel (26) liegt, wobei der Schliessteil (25) durch Axialverschiebung der Spindel (26) zur Auflage auf einen ringförmigen Ventilsitz (14; 21) des Ventilsitzelementes (15; 22) bringbar ist, **dadurch gekennzeichnet, dass** das Ventilsitzelement (15; 22) innerhalb einer Bohrung (10) im Ventilgehäuse (2) auf einer Auflagefläche (84; 84') gelagert und in der Art einer Kugelbewegung relativ zum Schliessteil (25) in eine Schliesspasslage drehbar und in dieser Schliesspasslage mittels einem Befestigungsring (86; 86') fixierbar ist.

9. Ventil nach Anspruch 8, **dadurch gekennzeichnet, dass** das Ventilsitzelement (15; 22) an seiner radialen Aussenwand mindestens teilweise mit einem kugelsektorförmigen Wulst (88; 88') versehen ist, der in der als Kugelschale ausgebildeten Auflagefläche (84; 84') gelagert ist.

10. Ventil nach Anspruch 8 oder 9, **dadurch gekennzeichnet, dass** zwischen dem Befestigungsring (86; 86') und der Auflagefläche (84; 84') ein elastischer Zwischenring angeordnet ist und/oder dass der Befestigungsring (86; 86') zusätzlich durch einen Konterring (89) fixiert ist.

11. Ventil nach Anspruch 8, 9 oder 10, **dadurch gekennzeichnet, dass** die Bohrung (10) im Ventilgehäuse (2) ein Innengewinde (85; 85') und der Befestigungsring (86; 86') ein dazu korrespondierendes Aussengewinde aufweist.

12. Ventil nach einem der vorangehenden Ansprüche, **dadurch gekennzeichnet, dass** der Ventilsitz (14; 21) des Ventilsitzelementes (15; 22) aus einer Formgedächtnislegierung gebildet ist.

## Claims

1. A valve (1) comprising at least one valve seat element (15; 22), a spindle (26) and a closure member (25) which is connected thereto by means of fixing means (62; 74; 81) and whose centre point is at least approximately on the axis (66) of the spindle (26), wherein the closure member (25) can be brought to bear against an annular valve seat (14; 21) of the valve seat element (15; 22) by axial displacement of the spindle (26), **characterised in that** the spindle (26) is stiff and is movable exclusively in the direction of the axis (66), that provided between the spindle (26) and the closure member (25) is a clearance which with loose fixing means (62; 74; 81) permits a movement of the closure member (25) in the manner of a ball movement and/or a radial and axial movement into a closure fitting position on the valve seat (14; 21) and the closure member (25) can be fixed in said closure fitting position by means of the fixing means (62; 74; 81).

2. A valve according to claim 1 **characterised in that** the closure member (25) is held on both sides by support means (43, 44; 69, 70) which have hemispherical or part-spherical elements (56, 57) which are supported in holder elements (53, 58) or which are in the form of hemispheres and are supported in holder means (71, 72).

3. A valve according to claim 2 **characterised in that** the holder elements or holder means (53, 58; 71, 72) are hollow-cylindrical intermediate tubes which are pushed over the spindle (26) and which at the ends towards the support means (43, 44; 69, 70) have cap-like holder rings (53, 58) or ball-like bulge portions.

4. A valve according to claim 1, claim 2 or claim 3 **characterised in that** the fixing means include a screw connection (62; 74) by means of which the closure member (25) is clamped between the support means (43, 44; 69, 70) in the closure fitting position.

5. A valve according to claim 1 **characterised in that** the closure member (25) is held on both sides by support means (43, 44) connected to a sleeve (77) which
a) is pushed loosely over the spindle (26) and held at one side in the axial direction by a connecting element (40) screwed to the spindle (26), or
b) is screwed loosely to the spindle (26) by means of a screwthread (82) and thereby held in the axial direction.

6. A valve according to claim 5 **characterised in that** the sleeve (77) can be fixed in the adjusted position of the closure member (25) relative to the spindle (26) by means of a solder material (81).

7. A valve according to one of the preceding claims **characterised in that** there is provided a guide element (39) which is guided in the valve seat element (15; 22) and by which the spindle (26) is held in centred relationship in the valve seat element (15; 22).

8. A valve (1) comprising at least one valve seat element (15; 22), a spindle (26) and a closure member (25) which is fixedly connected thereto and whose centre point is at least approximately on the axis (66) of the spindle (26), wherein the closure member (25) can be brought to bear against an annular valve seat (14; 21) of the valve seat element (15; 22) by axial displacement of the spindle (26), **characterised in that** the valve seat element (15; 22) is supported within a bore (10) in the valve housing (2) on a contact face (84; 84') and is rotatable into a closure fitting position in the manner of a ball movement relative to the closure member (25) and can be fixed in said closure fitting position by means of a fixing ring (86; 86').

9. A valve according to claim 8 **characterised in that** at its radial outside wall the valve seat element (15; 22) is at least partially provided with a bead (88; 88') which is in the form of a sector of a ball and which is supported in the contact face (84; 84') in the form of a ball socket.

10. A valve according to claim 8 or claim 9 **characterised in that** an elastic intermediate ring is arranged between the fixing ring (86; 86') and the contact face (84; 84') and/or that the fixing ring (86; 86') is additionally fixed by a lock ring (89).

11. A valve according to claim 8, claim 9 or claim 10 **characterised in that** the bore (10) in the valve housing (2) has a female screwthread (85; 85') and the fixing ring (86; 86') has a male screwthread corresponding thereto.

12. A valve according to one of the preceding claims **characterised in that** the valve seat (14; 21) of the valve seat element (15; 22) is formed from a shape memory alloy.

## Revendications

1. Robinet (1) comportant au moins un élément à siège d'obturateur (15 ; 22), une tige (26) et un obturateur (25) qui est relié à cette tige par des moyens de fixation (62 ; 74 ; 81) et dont le point médian se situe au moins approximativement sur l'axe (66) de la tige (26), dans lequel, par coulissement axial de la tige (26), on peut amener l'obturateur (25) à venir en appui sur un siège d'obturateur annulaire (14 ; 21) de l'élément à siège d'obturateur (15 ; 22), **caractérisé par le fait que** la tige (26) est conçue rigide et qu'elle peut se déplacer exclusivement selon la direction de l'axe (66), qu'entre la tige (26) et l'obturateur (25) il y a un jeu qui, les moyens de fixation (62 ; 74 ; 81) étant déverrouillés, autorise un mouvement de l'obturateur (25), à la façon d'un mouvement sphérique et/ou d'un mouvement radial et axial, pour venir dans une position de fermeture correcte sur le siège d'obturateur (14 ; 21) et dans lequel l'obturateur (25) peut se fixer dans cette position de fermeture correcte grâce au moyen de fixation (62 ; 74 ; 81).

2. Robinet selon la revendication 1, **caractérisé par le fait que** l'obturateur (25) est tenu des deux côtés par des moyens d'appui (43, 44 ; 69, 70) qui présentent des éléments (56, 57) en forme de demi-sphère ou en forme de calotte, qui sont portés dans des éléments formant monture (53, 58) ou qui présente la forme de demi-sphères et sont portés dans des moyens formant monture (71, 72).

3. Robinet selon la revendication 2, **caractérisé par le fait que** les éléments formant monture ou les moyens formant monture (53, 58 ; 71, 72) sont des tubes intermédiaires cylindriques creux qui sont enfilés sur la tige (26) et présentent, aux extrémités orientées vers les moyens d'appui 43, 44 ; 69, 70), des montures annulaires en forme de chapeau (53, 58) ou des logements de forme sphérique.

4. Robinet selon la revendication 1, 2 ou 3, **caractérisé par le fait que** les moyens de fixation comportent une liaison par vissage (62 ; 74) au moyen de laquelle l'obturateur (25) est bridé dans la position correcte de fermeture entre les moyens d'appui (43, 44 ; 69, 70).

5. Robinet selon la revendication 1, **caractérisé par le fait que** l'obturateur (25) est tenu des deux côtés par des moyens d'appui (43, 44) qui sont liés à un fourreau (77) qui
(a) est enfilé de façon lâche, sur la tige (26) et qui est maintenu d'un côté en direction axiale par un élément de liaison (40) vissé avec la tige (26) ou
(b) est vissé de façon lâche avec la tige ( 26) au moyen d'un filetage (82) et de ce fait est maintenu selon la direction axiale.

6. Robinet selon la revendication 5, **caractérisé par le fait que**, dans la position correcte de l'obturateur (25), le fourreau (77) peut se fixer par rapport à la tige (26) au moyen d'un matériau de brasage (81).

7. Robinet selon l'une des revendications précédentes, **caractérisé par le fait qu'**est prévu un élément de guidage (39) qui est guidé dans l'élément à siège d'obturateur (15 ; 22) et par lequel la tige (26) est maintenue centrée dans l'élément à siège d'obturateur (15 ; 22).

8. Robinet (1) comportant au moins un élément à siège d'obturateur (15 ; 22), une tige (26) et un obturateur (25) qui est solidairement relié à cette tige et dont le point médian se situe au moins approximativement sur l'axe (66) de la tige (26), dans lequel, par coulissement axial de la tige (26), on peut amener l'obturateur (25) à venir en appui sur un siège d'obturateur annulaire (14 ; 21) de l'élément à siège d'obturateur (15 ; 22), **caractérisé par le fait que** l'élément à siège d'obturateur (15 ; 22) est porté, à l'intérieur d'un perçage (10) prévu dans le corps de robinet (2), sur une surface d'appui (84 ; 84') et qu'il peut tourner à la façon d'un mouvement sphérique par rapport à l'obturateur (25) pour venir dans une position correcte de fermeture et que dans cette position correcte de fermeture il peut être fixé au moyen d'une bague de fixation (86 ; 86').

9. Robinet selon la revendication 8, **caractérisé par le fait que** l'élément à siège d'obturateur (15 ; 22) présente, sur sa paroi radialement extérieure, au moins partiellement un bourrelet en forme de secteur sphérique (88 ; 88') qui est porté dans la surface d'appui (84 ; 84') conçue en forme de coque sphérique.

10. Robinet selon la revendication 8 ou 9, **caractérisé par le fait qu'**entre la bague de fixation (86 ; 86') et la surface d'appui (84 ; 84') est disposée une bague intermédiaire élastique et/ou que la bague de fixation (86 ; 86') est en outre fixée par une contre-bague (89).

11. Robinet selon la revendication 8, 9 ou 10, **caractérisé par le fait que** le perçage (10) prévu dans le corps de robinet (2) présente un taraudage (85 ; 85') et la bague de fixation (86 ; 86'), un filetage extérieur qui lui correspond.

12. Robinet selon l'une des revendications précédentes, **caractérisé par le fait que** le siège d'obturateur 14 ; 21) de l'élément à siège d'obturateur (15 ; 22) est formé d'un alliage à mémoire de forme.
